# EUROPEAN PATENT SPECIFICATION

(11) **EP 4 534 948 B1**
(45) Date of publication and mention of the grant of the patent: **31.12.2025**
(21) Application number: 23201940.6
(22) Date of filing: 05.10.2023
(51) Int. Cl.: G01B 5/008

(54) **COORDINATE MEASURING MACHINE WITH COUNTERWEIGHT MEMBER**
KOORDINATENMESSGERÄT MIT GEGENGEWICHTSELEMENT
MACHINE DE MESURE DE COORDONNÉES AVEC ÉLÉMENT DE CONTREPOIDS

(43) Date of publication of application: 09.04.2025
(73) Proprietor: Hexagon Innovation Hub GmbH, 9435 Heerbrugg (CH)
(72) Inventor: PLANGGER, Karl Helmut, 6850 Dornbirn (AT); ZÜLLIG, Jan, 9315 Neukirch (CH); SCHEJA, Jochen, 6845 Hohenems (AT)
(74) Representative: Kaminski Harmann

(56) References cited:
- US-A1- 2018 216 923
- US-A1- 2020 049 477
- US-B1- 6 253 458

## Description

### FIELD OF THE INVENTION

The present invention relates to a structure and operation of a coordinate measuring machine (CMM), in particular a substantially manually driven articulated arm coordinate measuring machine (AACMM). The CMM comprises a base, articulated elements, a counterweight member, internal sensors, a control unit and a probe. The counterweight member is configured to provide a torque having opposite direction to a torque caused by weight of the articulated elements.

### BACKGROUND OF THE INVENTION

A CMM is a machine configured to measure 3D coordinates of certain points, in particular the whole surface topography, of a workpiece. CMMs are important in various industries e.g., in production measurement, quality control, or reverse engineering. They are used e.g., to determine deviations of the geometry of manufactured products from a design model, in particular to determine whether the deviations are within the manufacturing tolerance. Another application of a CMM gaining more prominence is the reverse engineering of an object. In such cases no design model exists, but an operator provides a guidance of the probe. While these tasks can be performed with a fully motorized system, such CMMs are typically heavy, stationary equipment. Moreover, to effectively utilize the accuracy of such CMMs they are often located in dedicated measurement laboratories/workshops with controlled environment parameters. This, however, causes sluggish feedback between the manufacturing and quality control, especially when additional workpiece conditioning is necessary.

Portable measurement arms offer a flexible, time and cost-efficient alternative to the above measurement setups. Portable measurement arms comprise a base to connect the machine to a typically inert support structure, a set of articulated elements, a set of internal sensors providing data regarding the state of said elements, a probe interface configured to accommodate a probe, typically exchangeably, and a plurality of probes. The probe is configured to interact with the workpiece in tactile and/or in non-contact manner. Coordinate data of object points on the workpiece are derived based on the state of the articulated elements and a data provided by a probe. Unless otherwise stated and/or it would complicate understanding, real, physical objects / phenomena and data about the respective real, physical objects / phenomena are used synonymously.

Many designs are at least theoretically feasible for the types and arrangement of the articulated elements of portable measurement arms. However, practical considerations, e.g., the requirements of ultra-high accuracy, low weight, large accessible volume, lead to a preferred embodiment in which the arm comprises a series of hinges and elongated cylinders allowing rotation about their axis, typically by a component located at the distal end of the cylinders. In addition, most articulated elements are non-motorized. In other words, the probe head is manually guided by an operator providing a decisive part of the driving force for the movement of the articulated elements by muscle power.

To achieve a large accessible volume and/or to provide alternative measurement path AACMMs are typically underdetermined as mechanical systems. I.e., the same probe posture can be realized by many different postures of the articulated elements. Particularly important, therefore, is the question of the gravity acting on the intermediate articulations. The compensation of the gravity requires support of one of the intermediate articulations. Manually providing such support, e.g., holding one of the intermediate articulations by the other hand of the operator, could result in excessive workloads in the form of sustained, non-natural poses and/or fatigue from holding a significant weight. Moreover, the size and weight of contemporary portable measurement arms means that considerable torques exceeding 10 Nm might act on the first hinge. I.e., uncontrolled movements of the AACMM might lead to injury or considerable material damage.

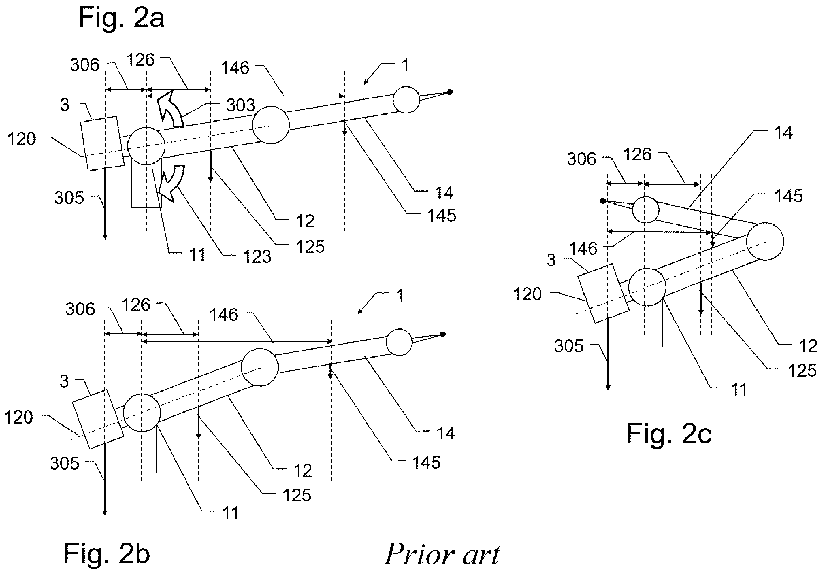

Prior art solution exists to mitigate the effects of gravity at least partly by utilizing different types of counterweight members. Prior art counterweight members, however, either increase the weight of the instrument as a whole and/or negatively influence the accuracy. In addition, sufficient compensation is often not possible, i.e., the operator still has to support one of the intermediate joints with his other hand. Some of the prior art concepts are shown in Figures 2 to 5.

### OBJECT OF THE INVENTION

In view of the above circumstances, one object of the present invention is to improve the handling of the articulated arm CMM, particular to at least reduce the workload caused by supporting heavy weights and sustained non-natural postures.

A second objective of the present invention is to improve the measurement accuracy of the articulated arm CMM.

A third objective of the present invention is to reduce the risk of collisions of the articulated elements with the environment and/or of falling of the articulated elements that could cause injury or damage the CMM and/or the workpiece. These objectives are at least partly achieved by realizing the characterizing features of the independent claim. Features, which further develop the invention in an alternative or advantageous manner are described in the dependent patent claims.

### SUMMARY OF THE INVENTION

The invention relates to a CMM, more particularly a substantially manually driven, AACMM. Substantially manually driven in the sense of the invention means that the operator of the AACMM touches one or more components of the measuring arm and guides the probe thereby.

The CMM comprises a base, a set of articulated elements, a counterweight member, a set of internal sensors, a control unit and a probe.

The set of articulated elements comprises a first segment connected to the base by a first hinge, a second segment connected to the first segment by a second hinge, and a probe interface connected to the second segment by a third hinge. The probe interface is configured to accommodate a probe. The probe is configured to provide probe data regarding an object point in the environment. The probe might be a tactile probe configured to provide probe data by mechanically interacting with the object point. However, the invention is equally applicable with non-contact probes such as triangulation sensors, laser scanners or ultrasound probes. The probe interface might provide further degrees of freedom regarding the movement of the probe. The probe interface might comprise an operator interaction element configured (a) to provide a better grip for the operator and/or (b) to enable an activation of direct operator commands.

Segments provide at least partial rotatability about an axis substantially parallel to a longitudinal axis of the segments, in particular a distal portion of the segments might be rotatable with respect to the proximal portion. Hinges in the context of the invention provide at least partial rotatability about an axis which is angled with respect to the axes of the connected segments, in particular perpendicular thereto. While it is advantageous for contemporary AACMMs to use one degree of freedom articulated elements, due to improved pose reproducibility and measurement accuracy, the invention is not limited to such designs.

Each sensor in the set of internal sensors is associated with at least one of the articulated elements and configured to provide internal sensor data regarding the associated element. In other words, at least the rotation state of each of the articulated elements is tracked by the appropriate sensors. A part of the internal sensors, in particular the displacement and/or force measuring sensors might provide data regarding a plurality of the articulated elements. A part of the articulated elements might be associated with a plurality of internal sensors. Alternatively, a sensor might be realized as a distributed sensor comprising a plurality of physically distinct sensor components and the sensor data is provided by the assembly as a whole.

The control unit is configured to derive (a) a pose change of the probe based on the internal sensor data, and (b) coordinate data of the object point based on the internal sensor data and the probe data. Coordinate data might be relative coordinates to further object points in the environment. Control units can be realized in many ways, a non-exclusive list comprises (i) one or more local controllers integrated with the CMM, and/or (ii) one or more generic computers located in the proximity of the CMM, and/or (iii) remote, in particular cloud based, controlling or a combination thereof.

The counterweight member is associated with the first segment and the first hinge and configured to provide a counterweight torque to the first hinge having an opposite direction to a gravitational torque acting on the first hinge. The inventive counterweight member comprises a force-providing element and a mechanism. The mechanism comprises a rotary element, a static element and an internal support. The force providing element provides a force to the rotary element, in particular directly. The static element is mounted on an axis of the first hinge and kinematically linked to the rotary element. A shape of the static element is configured to set the counterweight torque as a function of a rotation state of the first hinge. The internal support is configured to receive an input force and/or torque from the rotating element and configured to provide an output force and/or torque to an interaction area of the first segment. The interaction area is located closer to the second hinge than the first hinge, and the output force has a lower magnitude than the input force.

Static element in the sense of the invention means that said element is mounted on the axis of the first hinge in a fixed pose. For designs wherein the axis is integrated with the base the static element has a fixed pose with respect to the base. The shape of the static element includes aspects resulting from the true geometric shape and/or an eccentric and/or angled position with respect to the axis of the first hinge. From here shape is understood as the resulting effective shape of the static element. The resulting shape is not rotation symmetric.

The rotary element is configured to be displaceable with respect to the static element at least by a rotation movement. Kinematically linked in the sense of the invention means that the freedom of movement of the rotary element is restricted by the static element, in particular the shape of the static element determines a path of the rotary element. The rotary element might be in direct mechanical contact with the static element. Alternatively, the interaction is provided by intermediary elements. The rotary element might be geared to interact with the force providing element. The force providing element might comprise a rod or any suitable alternative to act on the rotary element.

The support structure is considered to interact with the first segment essentially only at the interaction area. In other words, the support structure can be seen as a component, which partially absorbs the forces, in particular the transverse forces, occurring in the mechanism. By limiting the interaction to the interaction area, the deformation of the support structure have at most a limited effect on the first segment. In other words, the support structure at least reduces, preferably eliminates the influence of the transverse force on the first segment.

In some embodiments, the first and second segments are elongated and configured to provide a rotation about rotation axes aligned with the direction of elongation. Aligned in the sense of the invention means that the rotation axis and the direction of the elongation are substantially the same. In some specific embodiments, the first and second segments are substantially cylindrical. The first and second segments might comprise (a) a proximal end rigidly connected to the proximal side hinges, (b) a distal end rigidly connected to distal side hinges, and (c) a bearing mechanism providing a rotation between the proximal and distal ends. The first and second segments might comprise areas configured to be held/manipulated by the operator. These areas provide better grip and/or thermal insulation, mitigating the inaccuracies caused by warming from the operator's grip.

In some embodiments, the force-providing element comprises a spring, in particular a coil spring. In some specific embodiments, the spring is a pressure spring. In some specific embodiments, the spring is located within the first segment, i.e. between the first hinge and the second hinge, and aligned to the rotation axis of the first segment. The spring is configured to provide a force substantially independent from the rotation state of the first segment. In other words, a spring associated with, in particular mounted inside of, the first segment provides a force acting on the rotary element. Pressure springs carry the advantage that they minimize the risk of catastrophic failure. Nevertheless, other spring designs, in particular leaf, or torsion springs, might be equally applicable to realize the invention.

In some embodiments, the first segment comprises a rigid first segment shell. The first segment shell interacts with the internal support only through the interaction area. In some specific embodiments, the interaction area is at least five times farther from the first hinge than the second hinge. In other words, the first segment shell bears as little load as possible within the design parameters. The advantage of this construct is that the first segment shell experiences the least deformation possible which increases the measurement accuracy. Alternatively, or additionally an interaction sensor configured to provide sensor data regarding the output force and/or torque is arranged to the interaction area. In such embodiments, the interaction sensor provides data regarding a possible bending or other kinds of deformations of the first segment shell. From here on, unless otherwise specified, only embodiments, wherein the first segment shell is in substantially force-free state are discussed in detail.

In some embodiments, the static element is a cam. The shape of the cam is designed such that the counterweight torque arising from an interaction of the rotary element and the static element at least approximately compensates the gravitational torque acting on the first hinge. Compensation in the sense of the invention covers partial- or overcompensation, i.e., a net torque acting on the first hinge causes a rotation having opposite direction than the one caused by gravity.

In some specific embodiments, the mechanism comprises a plurality of cams each having different shapes. A selection element configured to set one of the cams to act as the static element. The plurality of cams is configured for different operational modes of the AACMM, e.g. different operational modes representing different rotation states of the second hinge. Additionally, or alternatively the mechanism might comprise a cam with a plurality of surfaces. A first manual adjustment element is configured to set one of the plurality of surfaces to act as the static element.

In some specific embodiments, the mechanism comprises a second manual adjustment element configured to adjust the pose of the rotary element, in particular the second manual adjustment element comprises a sliding element, a thread, or a screw.

In some specific embodiments, the mechanism comprises a third manual adjustment element configured to adjust a magnitude of the force exerted by the force providing element. In particular the third manual adjustment element comprises a sliding element, a thread, an excenter or a screw. The third manual adjustment element might be foreseen to compensate the effects of wear and tear on the spring. All the plurality of cams, first, second and third manually adjustment elements allow a robust, purely mechanical extension of the functionalities of the AACMM. Such mechanical adjustment nonetheless might be beneficially combined with active motorized components, by reducing the range to be controlled and thereby the power requirements of the motors.

In some embodiments, the shape of the static element, in particular wherein the static element is a cam, is designed provide a stable position and a stability range for the first hinge. Within the stability range a net torque, comprising the gravitational and counterweight torques, causes a rotation of the first hinge towards the stable position. The advantages of the stability range are twofold. Firstly, the stability range might provide a safe parking position, i.e., the operator might temporarily interrupt a measurement and leave the AACMM in the safe parking state. Secondly, the stability range might also provide a stable, preferred orientation for the first segment. This is beneficial e.g., for measurement operation wherein large reach is required, which is typically achieved by orienting the first segment near horizontally. Owing to the stability range the operator can perform the measurement without having to worry about the proper positioning and manually supporting the segment. It is clear for the skilled person that the static element can be designed to provide a plurality of stability ranges, in particular to realize both of the above-mentioned functionalities. Especially advantageous is that by keeping a near-constant orientation the biases and the accuracies of the sensors remain also near constant during the measurement task. This improves the reproducibility of the probe pose and thereby the precision of the measurement. The stable position and the stability range, while not limited to, is therefore to be interpreted in the context of improved measurement accuracy during the finer movement of the AACMM.

In some specific embodiments, the static element comprises a neutral point and the stable position corresponds to the neutral point of the static element. Advantageously, the here described stabilization is achieved passively by a mechanical design, i.e. without the involvement of a controller or a motorized element. Such mechanical functionalities nevertheless might be beneficially combined with active controlled motorized components, by reducing the range to be actively controlled and thereby the power requirements of the motors.

In some specific embodiments, the shape of the static element is designed to provide a lift range for the first hinge. Within the lift range the net torque causes an upward rotation of the first hinge. Such lift range might provide a crash protection functionality, in particular the lift range corresponds to one of (a) a vertical position of the probe interface is below a vertical position of the first hinge, and/or (b) a vertical position of the second hinge is below a vertical position of the first hinge.

In some embodiments the CMM is configured, based on the pose of the second hinge, to automatically adjust (a) the force provided by the force providing element, and/or (b) the pose of the rotary element. Automatic adjustment in the sense of the invention might be provided by appropriate passive mechanical elements or by a motorized component. Unlike to the prior art, however, a major part of the counterweight torque is provided by the spring, i.e. a smaller, more compact motor is sufficient for the inventive AACMM.

In some specific embodiments, the set of internal sensors comprises a second hinge pose sensor, and the control unit is configured to provide the adjustment based on data provided by the second hinge pose sensor.

In some embodiments the mechanism comprises a further rotary element kinematically linked to the rotary element. A rotation of the rotary element causes a position change of a rotation axis of the further rotary element along a constrained path. The further rotary element is in point or line contact with the static element. In other words, the further rotary element is constrained to be in tangency with the static element. The axis of the first hinge has an offset to a line defined by a contact point between the further rotary element and the static element and the rotation axis of the further rotary element. The shape of the static element is configured to define the offset as a function of the rotation state of the first hinge. I.e., for rigid mechanical components the force acts along the surface normal, which for components with circular cross section is the radial direction. The lever arm of counterweight torque is defined by the offset of the line connecting the rotation axis of the further rotary element and a contact point, e.g., a point representing the contact line, from the axis of the first hinge. In some specific embodiments, the rotary element is a lever gear, and the further rotary element is a roller, in particular a cylindrical roller, mounted on the lever gear in a position offset to a rotation axis of the level gear.

In some specific embodiments, the counterweight member comprises a friction element configured to provide a friction torque for the first hinge. In some specific embodiments, the friction element is comprised by the mechanism, in particular arranged to the axis of the first hinge.

In some specific embodiments, the friction element causes a motionless parking state of the first hinge, in particular by blocking the rotation of the rotary element. The motionless parking state might be activated in an absence of forces exerted by the operator on one of articulated elements and/or as a result of a parking command provided by the operator. The command might be provided by mechanical elements, e.g., a lever or switch, or electronically, in particular as a software command. The friction torque can be limited to a maximum torque or break of torque to prevent damage of the system in case of a malfunction or overload by the user.

In some embodiments, the friction element comprises (a) an active component, in particular electromagnetic actuated clutch/brake piston, and/or (b) an eddy-current brake, and/or (c) a thixotropic and/or magnetodynamic component, in particular a bearing comprises a thixotropic and/or magnetodynamic fluid, and/or (d) a centrifugal clutch, and/or (e) a form lock.

In some embodiments, the friction element is configured to provide a non-linear change of the friction torque dependent on (a) the rotation state and/or a motion speed of the first hinge, and/or (b) the rotation state and/or a motion speed of the probe interface. The friction element might comprise a flex rachet handle configured to block a downward a movement of the first hinge in an engaged state. The flex rachet handle is configured to enable an upward movement both in the engaged and disengaged state. The friction element might also comprise a user interaction element arranged to the proximity of the flex rachet handle and configured to activate and deactivate the engaged state. Some embodiments of the user interaction element operate purely mechanically, i.e., by direct transfer of a force exerted by the user. Alternatively or additionally, the flex ratchet handle might comprise an overload protection causing an automatic termination of the engaged state if a torque acting on the first hinge exceeds an override threshold. Said overload protection might be realized by passive mechanical components, in particular by the shape and arrangement of the components of the friction element.

The friction element according to the invention could serve two different purposes. On the one hand the friction element might provide a locking functionality, with "infinite" friction torque limit. On the other hand the friction element might provide an attitude/velocity dependent friction torque i.e. the friction torque might be high in the danger zones, e.g. for coarse movement near the specimen, but might be low far away from the danger-zones. A friction element in the sense of the invention could provide any one of these or both of these functionalities.

Alternatively or additionally, the friction element might be configured to provide a high-speed friction torque associated with a position change, e.g. fast movement far away from the workpiece, and a low-speed friction torque associated with a measurement condition, e.g. fine movement near the workpiece. The low-speed friction torque is lower than the high-speed friction torque, in particular substantially zero. That the resistance is essentially zero for fine movements would not only improve measurement accuracy and efficiency, but also give the perception that the operator is using a fine, light tool associated with such jobs. In contrast, coarse movements are accompanied more frequently by the exertion of perceptible forces. This is reproduced by the increased high-speed friction torque.

In some embodiments, the set of internal sensors comprises a measurement condition sensor configured to provide measurement condition sensor data regarding operator actions. The control unit is configured to activate the measurement condition based on the measurement condition sensor data. In some specific embodiments, the measurement condition sensor comprises a force sensor and/or an acceleration sensor and/or a touch sensor. The measurement condition sensor data comprises data about a force exerted by an operator, and/or an observed acceleration of the probe interface and/or a presence of a grip by an operator and/or a distance from the workpiece.

In some embodiments, an upper and/or a lower safety level is defined regarding the rotation state of the first hinge. The friction element is configured to provide an increment of the friction torque when the rotation state of the first hinge approaches one of the safety levels. In some specific embodiments, the set of internal sensors provides crash protection data based on the rotation state of the first hinge, and the control unit is configured to provide commands to increase the friction torque based on the crash protection data. The safety levels and/or crash protection data, while not limited to, is mainly to be understood in the context of the position change condition. Safety levels might be provided in a gesture-controlled manner.

In some embodiments, the rotary element is a geared wheel, geared belt or geared lever, the force providing element comprises a motor, and the control unit is configured to provide control commands to the motor. A motor in the sense of the invention might provide a major part of the counterweight torque or even the complete counterweight torque. A motor might also be an auxiliary component, wherein the motor provides only a part of the counterweight torque, in particular the motor might provide a balancing torque.

In some embodiments, the motor comprises a gearbox, and the rotary element is in contact with the gearbox. Contact in the sense of the invention means that an output element of the gearbox is directly acting on the rotary element.

In some specific embodiments, the gearbox is configured to decouple the motor from the rotary element, and/or the gearbox comprises a manually controllable force setting element configured to provide operator settings to the gearbox to adjust the counterweight torque in the measurement condition, and/or the control unit is configured to provide settings to the gearbox to adjust the counterweight torque in the measurement condition based on a stored settings database.

In some embodiments, the friction element comprises the motor. The motor might provide the friction torque passively, i.e., as an electromagnetic brake, or actively. When the motor acts as an active friction element the control unit might dynamically set the appropriate torque. The motor can provide advanced functionalities to the ones described for the friction element. E.g., the motor can not only retard or block a motion but can also guide it actively. In other words, it can not only stop/rest the articulated element, but also actively move it in the desired direction or position.

In some embodiments, the force providing element comprises the spring and the motor. A first hinge sensor is configured to provide net torque data regarding the net torque acting on the first hinge. The control unit is configured to provide a balancing functionality comprising (a) receiving and processing the net torque data, (b) providing commands to the motor to provide a balancing torque such that the net torque acting on the first hinge approaches a target torque, in particular zero. The balancing functionality can be efficiently combined with the measurement condition, e.g., fine movement near the workpiece.

In some specific embodiments, the balancing torque limited is to a magnitude of ±30%, more particularly ±20% of the counterweight torque. Such embodiments are beneficial as the relaxed requirements regarding the power enable the utilization of lighter and/or more precise motors.

In some specific embodiments, the balancing torque is limited by a balancing threshold such that the balancing functionality is deactivated if the balancing torque exceeds the balancing threshold, e.g., in response to a force or torque exerted by an operator action. In alternate words, the operator can override the stabilization of the AACMM by gesture control, i.e., by departing from the workpiece. The control unit might provide a command to activate the position change condition in response.

In some embodiments, the CMM comprises an operator action sensor configured to provide operator action data regarding an operator guidance of one of the articulated elements. The operator action sensor might comprise a force sensor and/or an acceleration sensor and/or a touch sensor. The CMM is configured to access measurement configuration data, in particular regarding the settings of the force providing element, and/or the mechanism, and/or the friction element. The CMM is configured to provide an assistance functionality comprising (a) receiving and processing the operator action data, (b) deriving a guidance torque acting on the first hinge based on the operator action and measurement configuration data, and (c) providing commands to the motor to provide an assistance torque acting on the first hinge, in particular wherein the assistance torque has the same direction and at least the same magnitude as the guidance torque.

In some embodiments, the second hinge comprises a second counterweight member analogous to one of the embodiments of the counterweight member. The second counterweight member might have a design differing from the counterweight member, in particular a simplified design.

### BRIEF DESCRIPTION OF THE DRAWINGS

By way of example only, specific embodiments of the invention will be described more fully hereinafter with reference to the accompanying figures, wherein:
Figure 1 illustrates the functioning of a generic AACMM;
Figure 2 illustrates the functioning of a prior art counterweight member with passive counterbalance;
Figure 3 illustrates the functioning of a prior art counterweight member with pneumatic spring;
Figure 4 illustrates the functioning of a prior art counterweight member with motor;
Figure 5 illustrates a prior art counterweight member with coil spring and cam;
Figure 6 illustrates a first embodiment of the inventive counterweight member with a coil spring as force providing element;
Figure 7 illustrates a second embodiment of the inventive counterweight member with a leaf spring as force providing element;
Figure 8 illustrates a third embodiment of the inventive counterweight member with a spring and a motor as force providing elements;
Figure 9 illustrates the stable position of the first hinge provided by a concave shaped cam;
Figure 10 illustrates exemplary manual adjustment possibilities.
Figure 11 illustrates the determination of coordinate data by a flowchart.
Figure 12 illustrates, by a flowchart, an embodiment of the crash protection functionality.
Figure 13 illustrates, by a flowchart, an embodiment of the balancing functionality.
Figure 14 illustrates, by a flowchart, an embodiment of the assistance functionality.

### SPECIFIC EMBODIMENTS OF THE INVENTION

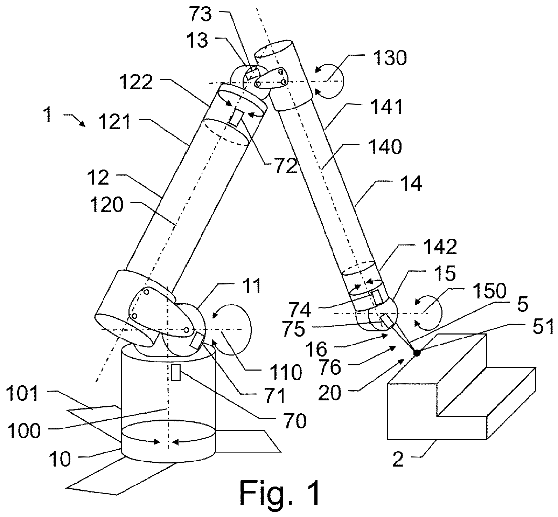

Figure 1 depicts schematically a generic AACMM **1** performing a coordinate measurement on a workpiece **2.** The AACMM is equipped with a tactile sensor as the probe **5** mounted on the probe interface **16,** i.e., the operator performs the AACMM measurement by touching the object point **20** with a tactile sensing element **51,** depicted as ruby sphere. The AACMM **1** comprises a base **10** with fixing elements **101,** e.g., permanent magnets, screws, pneumatic components etc., configured to provide a mechanical coupling with the environment in a fixed pose relative to the workpiece **2.** The AACMM **1** also comprises a set of articulated elements **11-16,** comprising a first hinge **11** connecting the first segment **12** to the base **10,** a second hinge **13** connecting the second segment **14** to the first segment **12** and a third hinge **15** connecting the probe interface **16** to the second segment **14.** Each of the articulated elements **11-16** and the base **10** provide a single rotary degree of freedom about respective axes **100,110,120,130,140,150.** Respective sensors **70-76** (only schematically indicated) are associated with the base **10** and each of the articulated elements **11-16** and provide sensor data regarding the associated element. The segments **12,14** are elongated cylinders and the axes of rotation **120,140** correspond to the directions of elongation. The segments **12,14** comprise a proximal side **121,141** rigidly connected to the respective proximal hinges **11,13** and a distal part **122,142** providing the rotation about the axis of the segment **120,140.** The distal part is rigidly connected to the respective distal side hinges **13,15.** In the depicted embodiment the proximal portion of the hinges **11,13,15** have a fixed spatial relationship with the respective proximal side component **10,12,14.** While many of the features of the claimed invention are illustrated utilizing the embodiment depicted in Figure 1, the present invention is not limited to this embodiment. The specific features of other embodiments might be applied respectively.

Figure 2 depicts schematically a prior art AACMM **1** comprising a counterweight member **3** as an actual counterweight mounted along the axis **120** of the first segment **12** on the opposite side of the first hinge **11.** The first hinge **11** experience a gravitational torque **123** arising from the gravity acting on the different articulated elements **12,14** and a counterweight torque **303.** In the depicted embodiment the counterweight torque **303** arising from the gravity acting on the counterweight member **3.** The depicted torques arise from the forces **125,145,305** multiplied by the respective lever arms **126,146,306.** For transparency reasons only the first **12** and second segments **14** are considered in this figure.

An advantage of this design is that the counterweight torque **303** provided by the counterweight member **3** is proportional to the gravitational torque caused by the weight of the first segment **12** for any rotation state of the first hinge. However, to provide an equal torque either the lever arm **306** relating to counterweight member **3** has to be comparable to the lever arm **126** relating to the first segment **12,** which would make the operation of the AACMM **1** unwieldy, or the counterweight member **3** has to be proportionally heavier which would impact the portable nature of the instrument. Furthermore, a substantial part of the torque arising from the weight of the higher order members, e.g., the second segment **14.** Such counterbalance-based counterweight member **3** on its own cannot compensate the change of the torque, i.e., for the situations as depicted in Figure 2c the net torque would lead to a counterclockwise rotation of the first hinge.

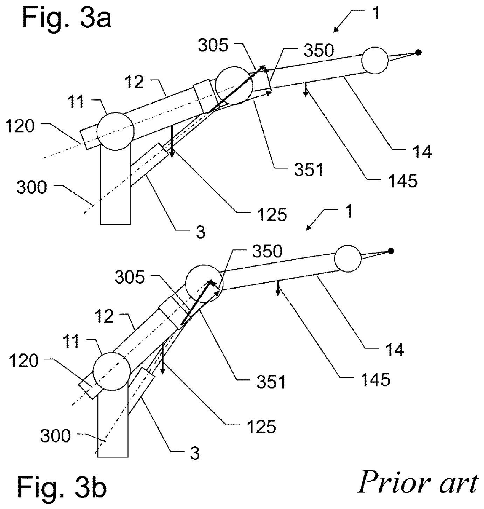

Figure 3 depicts another prior art AACMM **1** with a counterweight member **3** comprising a pneumatic spring. The advantage of a pneumatic spring is its lightweight construction. To provide the counterweight torque the spring must be arranged such that it is offset to the first segment **12** and its axis **300** is angled to the axis **120** of the first segment. The counterweight force **305** acting along the axis **300** of the pneumatic spring comprises a portion perpendicular **350** and parallel **351** to axis **120** of the first segment. The parallel **351** and transverse **350** portions vary differently than the respective portions of the gravity **125.** The magnitude of the force **305** also varies due to the variation in the strain state. I.e., with such a design not even the torque arising from the weight **125** of the first segment **12** let alone the torque arising from the weight **145** of the second segment **14** is compensated independently of the rotation state of the first hinge **11.** Current pneumatic springs possess a considerable friction, which negatively influences operator comfort and measurement precision. Moreover, pneumatic springs wear relatively quickly, i.e., for optimal accuracy frequent replacement of the pneumatic spring is required.

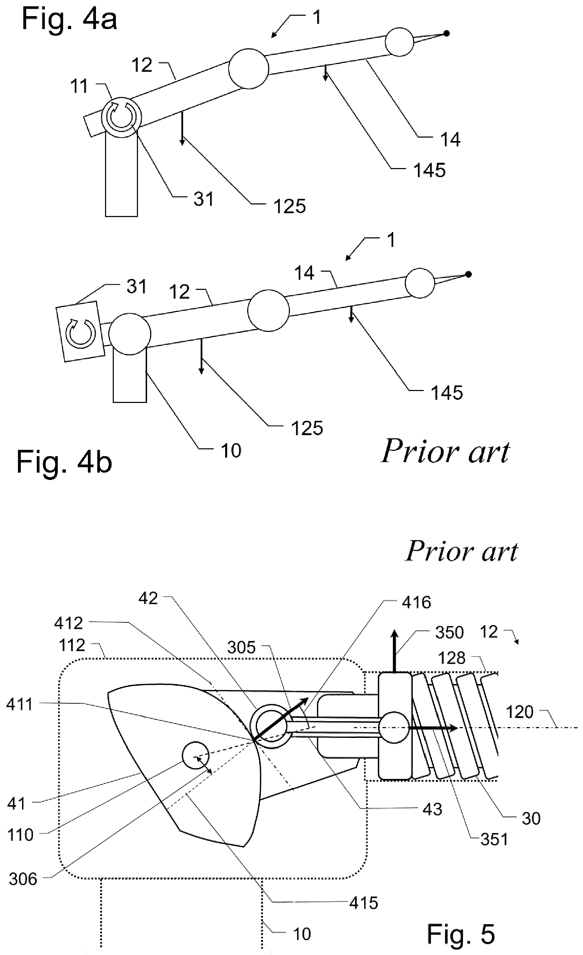

Figure 4 depicts another prior art AACMM **1** with a motorized **31** counterweight member providing the counterweight torque. Similar embodiments are disclosed e.g., in US 10,895,445 B2. In Figure 4a the motor **31** is arranged to the first hinge **11,** while in the embodiment depicted in Figure 4b it is arranged coaxial to the first segment **12.** The motor might also be arranged to the base **10.** The advantage of a motor **31** as counterweight member is the ability to compensate the torque arising from the weight **125,145** of all articulated elements, only the first **12** and second segments **14** are depicted. A clear disadvantage is the cost, i.e., requirements for the motor **31** are rather strict regarding the weight, maximal torque, precision, and compactness. Moreover, unless an appropriate sensor suite is provided the motor might also try to compensate the torque arising from operator action, which potentially makes the usage of such AACMMs cumbersome.

Figure 5 schematically depicts another prior counterweight member associated with the first hinge **11** and the first segment **12** based on a coil spring arranged along the axis **120** of the first segment **12,** e.g. as disclosed in US 6,253,458 B1. The spring **30** as force providing element acts on a rotary element **42,** depicted as a roller, via a rod **43.** The rod **43** transfers the spring force, i.e., the parallel component **351** of the counterweight force **305,** to the rotary element **42.** The first segment **12** is in a fixed spatial relationship with the housing **112** of the first hinge, and the movement of the rotary element **42** causes a rotation of the housing **112.**

The counterweight member comprises a cam as a static element **41** mounted on the axis **110** of the first hinge. The axis **110** of the first hinge is in a fixed spatial relationship (not shown) with the base **10.** The kinematical link between the rotary **42** and static elements **41** in the depicted embodiment is a tangency or point contact. The counterweight force **305,** i.e., the contact force between the rotary **42** and static elements **41** acts in a direction perpendicular to the surface tangent **412** of the cam **41** at the point of contact **411.** In other words, the pressure angle **416** is defined by the shape of the static element **41.** Since the action line **415** of the counterweight force **305** is offset to the rotation axis **110** of the first hinge with a lever arm **306** a counterweight torque is generated. Since the lever arm of the gravity is more than ten times the lever arm **306** of the counterweight force **305** the latter must be proportionally large. Moreover, while the parallel component **351** of the counterweight force **305** is absorbed/compensated by the spring **30** the same cannot be said about the transverse component **350.** In the depicted design the transverse component **350** is acting on the outer shell **128** of the first segment **12,** which could significantly deform the first segment **12.**

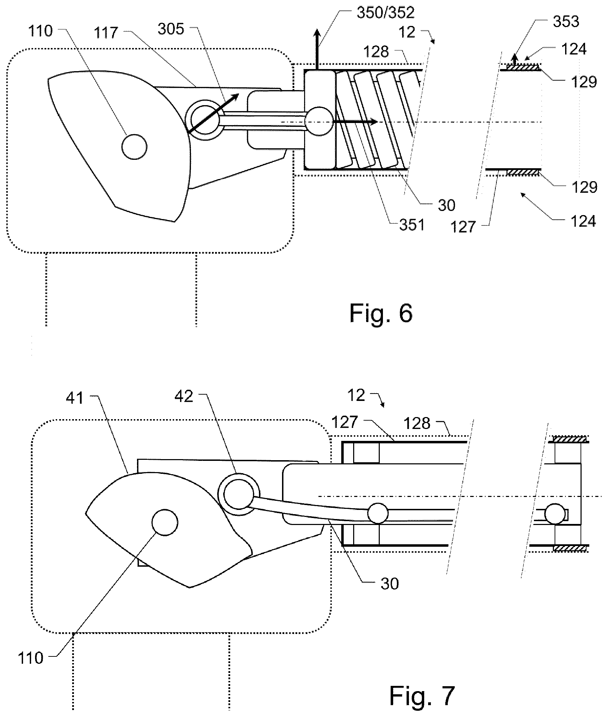

Figure 6 shows schematically a first embodiment of the inventive counterweight member. The counterweight member is based on analogue concepts and comprises analogue components as the prior art counterweight member shown in Figure 5. Additional to the first segment shell **128,** i.e., the outer wall, the first segment **12** comprises an internal support **127** anchored to the axis **110** of the first hinge, by respective guides **117,** such that the internal support can perform a rotation about the axis **110** of the first hinge. The internal support **127** is configured to absorb/compensate the transverse component **350** of the counterweight force **305.** The transverse component **350,** in the depicted embodiment is essentially the input force **352.** The internal support **127** interacts with an interaction area **124** of the first segment **12,** in particular the first segment shell **128.** The interaction area **124,** receiving the output force **353,** is located closer to the second hinge than the first hinge, and the internal support **127** have no further points of contact with the first segment shell **128.** Due to its own deformation the internal support **127** absorbs/compensates a decisive portion of the transverse component **350** of the counterweight force **305,** i.e., the input force **352.** The spring **30** similarly absorbs/compensates a decisive portion of the parallel component **351.** Due to this construct the output force **353** is of lower magnitude, e.g., negligible, as compared to the input force **352.** Thus, the first segment shell **128** is a non-load-bearing component, which is advantageous for the measurement accuracy. In the depicted embodiment interaction sensors **129** are mounted to the interaction areas **124** to provide interaction data between the internal support **127** and the first segment shell **128.**

Figure 7 illustrates a second embodiment of the inventive counterweight member. The force providing element comprises a leaf spring **30** mounted to the internal support **127.** The internal support **127** does not exert a considerable force or torque to the first segment shell **128.** The leaf spring **30** provides the force directly to a rotary element **42** mounted on the spring **30.** The rotary element **42** is in point contact with a static element **41** mounted to the axis **110** of the first hinge. The shape of the static element **41** is configured to set the magnitude of the counterweight torque.

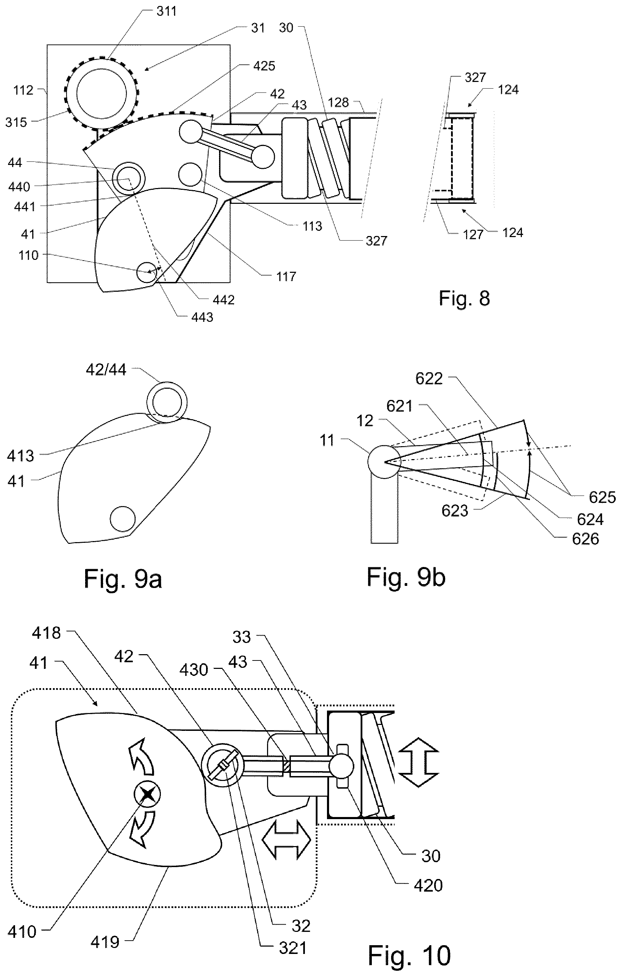

Figure 8 illustrates a third embodiment of the counterweight member. The depicted force providing element comprises a spring **30** and a motor **31,** represented by a gearbox **311.** The rotary element **42** is a lever gear configured interact with the gearbox **311** via the respective sets of gears **425,315.** The spring **30** is acting on a rotary element **42** via a rod **43.** The mechanism comprises a further rotary element **44** mounted to the rotary element **42** and configured to interact with the static element **41.** The further rotary element **44** is in point or in line contact with the static element **41.** The axis **110** of the first hinge has an offset **443** to a line **442** defined by a contact point **441** between the further rotary element **44** and the static element **41** and the rotation axis **440** of the further rotary element **44.** The shape of the static element **41** is configured to define the offset **443** as a function of the rotation state of the first hinge, and with that counterweight torque.

The first segment comprises the rigid first segment shell **128** and the internal support **127.** The first segment shell **128** is fixed to the housing **112** of the first hinge, i.e., they rotate together. The interaction of the first segment shell **128** and internal support **127** takes place only in the interaction area **124.** A part of the spring **30** and the spring guide **327** is located inside the internal support **127.** The spring guide **327** is joined to the internal support **127.** Thereby the transverse component of the counterweight force is balanced by a deformation of the spring guide **327** and the internal support **127.** The spring guide **327** and the internal support **127** is linked to the housing **112** by respective guides **117.** Said guides **117** are also configured to provide a rotation around the axis **110** of the first hinge. The movement of the rotary element **42** is constrained by an interaction respective fixing element **113** and a path provided by the guide **117.**

It is clear to the skilled person that the embodiments depicted in Figures 6-8 are simplified, schematic illustration. Actual embodiments might comprise further components, e.g. force transfer elements based on levers, wires of gears, friction elements, in particular brakes or locks. The skilled person also understands that the invention is not limited to the types of springs depicted, or to embodiments wherein the force providing element comprises a spring.

Figure 9 depicts a concave shaped cam as the static element **41.** The cam has a neutral point **413** corresponding to a stable position **621** of the first hinge **11** and the first segment **12.** A stability range **624** exist around the stable position **621.** Within the stability range **624** the net torque **625** acting on the first hinge **11** causes a rotation towards the stable position **621.** As depicted in Figure 9b the stability range **624** can be asymmetric, i.e., the upper limit **622** of the stability range **624** is closer to the stable position **621** than the lower limit **623.** It is clear to the skilled person that the neutral point **413** cannot be derived from the shape of the cam **41** alone, but rather a torque balance shall be considered. The torque balance depends on the attitude of the second segment and the further higher order elements as well as the force provided by the force providing element, these input parameters should be considered during the drafting of the design of the cam **41.** The concave shape serves illustration purposes only, convex static elements **41** with appropriate change of the slope also provide the described effects.

The static element **41** might comprise a plurality of neutral points **413.** The cam **41** might also provide a lift range **626,** within the lift range a net torque **625** acting on the first hinge **11** causes an upward rotation of the first hinge **11.** In other words, a range between the stable position **621** and the lower limit **623** of the stability range **624** can be understood as a lift range **626.**

Figure 10 depicts some exemplary options to manually adjust the elements of the mechanism or the force providing element. The static element **41** is shown to have a first manual adjustable element **410** to adjust its pose relative to the axis of the first hinge. Such adjustment might be performed to justify the static element **41.** Alternatively, the static element **41** might comprise a plurality of surfaces **418,419** and the first manual adjustment element **410** is configured to set one of the plurality of surfaces as active surface. The plurality of surfaces **418,419** are configured to provide different ranges for the magnitude of the counterweight torque, i.e., representing a different operation mode for the CMM. Alternatively or additionally, a plurality of static elements **41** might be mounted on the axis of the first hinge and the first manual adjustable element **410** might set one of the static elements as active static element **41.**

Additionally, a slit as second manual adjustment element **420** is shown to adjust a position of a contact **33** between the spring **30** and a rod **43.** I.e., the second manual adjustment element **420** indirectly adjusts pose of the rotary element **42** with respect to the spring **30** and/or the static element **41.** The depicted rod **43** comprises a grub screw as third manual adjustment element **430.** These and similar elements might be utilized to change the length of the spring **30,** and the force provided by it. Such elements advantageously allow e.g., a compensation of wear and tear effects arising from the usage of the spring **30.** A friction element **32,** e.g., a form lock or a centrifugal clutch, is mounted on the rotary element **42** configured to block its rotation. The friction element **32** comprises a user interaction element **321** configured to activate or deactivate the friction element. The type and placement of the friction **32** and user interaction elements **321** is purely illustrative. The invention is beneficially combinable with motorized friction elements **32,** and/or friction elements **32** arranged on the axis of the first hinge and/or electronic, in particular software-based user interaction elements **321.**

The depicted options are non-exclusive, and any similar adjustment element might be used as a standalone element or in combination. Some of the depicted or suitable alternative adjustment options might be performed in a "loaded state", while other adjustment, in particular a manipulation of the static element **41** or the spring **30** might be preferably performed in a "force-free state".

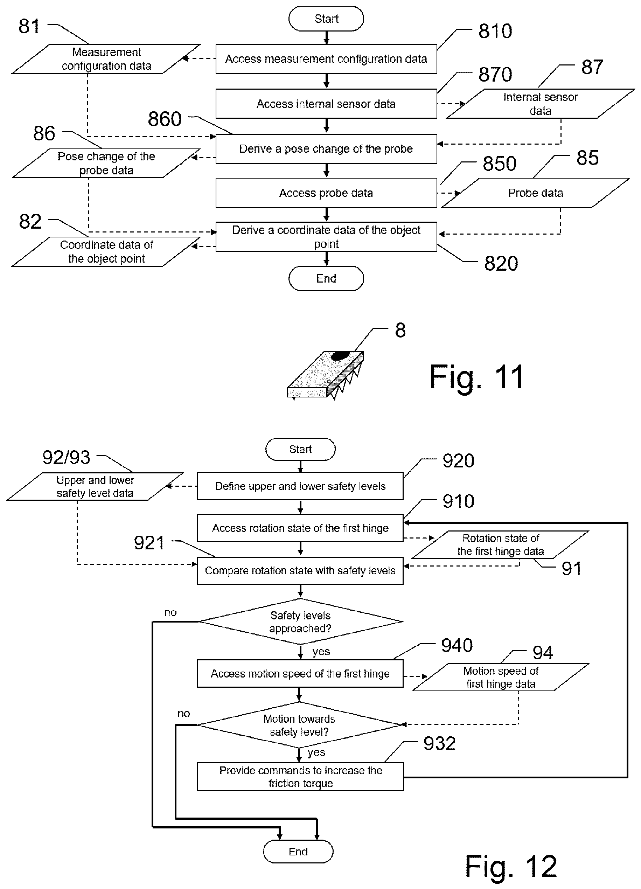

Figure 11 illustrates a generic method of deriving **820** coordinate data **82** of the object point by a flowchart. Command/flow-lines show as bold and data-lines as dashed arrows. The depicted flowcharts focuses on the essential features of the claimed invention and the actual embodiments comprise further, non-depicted elements, in particular command or data elements and/or data transfer lines. Moreover, command or data modules might be depicted in a simplified form due to reasons of clarity and conciseness. The steps of the depicted method might be performed entirely by the control unit **8,** depicted as a single microcontroller. The invention is not limited to a specific realization of the control unit **8.** Alternative embodiments of the control unit **8,** e.g., an external computer or a distributed control unit **8,** in particular wherein the internal sensors and/or the probe provide pre-processed data, are also applicable.

The control unit **8** accesses **810/870** measurement configuration data **81** representing the geometry, in particular the metrology chain, of the CMM and internal sensor data **87.** The internal sensor data **87** is representative of at least a relative motion, preferably a relative pose, provided by the articulated elements. Based on the measurement configuration data **81** and the internal sensor data **87** pose change of the probe **86,** preferably data regarding the absolute pose of the probe, is derived **860.** The control unit **8** also accesses **850** the probe data **85.** The probe data **85** might comprise interaction information between the probe and the object point, or a distance of the two. Based on the pose change of the probe **86** and the probe data **85** coordinate data **82** of the object point is derived **820.** There are many variations and alternatives of the here depicted method in the state of the art and the claimed invention is not limited to any specific embodiment.

Figure 12 illustrates an active control of the friction torque based on an upper **92** and lower safety levels **93** and using data regarding the rotation state **91** and a motion **94** of the first hinge. An active control might be foreseen e.g., as part of a crash protection functionality. As a first step the upper **92** and lower safety levels **93** are defined **920.** In a next step the rotation state **91** of the first hinge is accessed **910** and compared **921** to the safety levels **92/93.** If the rotation state **91** of the first hinge indicates that it is in a danger zone in the proximity of the safety levels **92/93** the motion speed **94** of the first hinge **940** is also accessed. If the first hinge moves towards the relevant safety level **92/93** commands are provided **932** to increase the friction torque until the first hinge comes to a standstill. Many alternatives of the here depicted process exists. E.g., instead of the rotation state and motion speed of the first hinge the parameters of other relevant elements, in particular the probe interface or the second hinge, might be utilized as control parameters. Additionally, commands to reduce the friction torque might also be provided if a motion away from the safety levels **92/93** is detected. Additionally, analogous effects might be reproduced using passive components, in particular springs or eddy-current brakes.

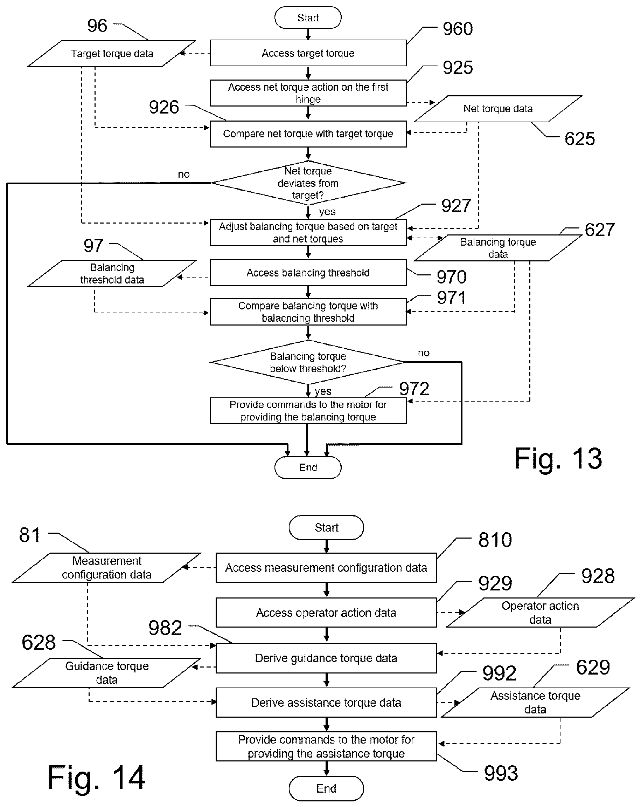

Figure 13 illustrates an active provision of a balancing torque **627** to set the net torque **625** acting on the first hinge to a target torque value **96,** in particular zero. Such active control might be foreseen e.g., as part of a balancing functionality. As a first step the target torque **96** is accessed **960.** The target torque **96** might be determined manually or automatically, e.g., based on a measurement task and operator actions or on a perception of the environment. In a next step the net torque **625** acting on the first hinge is accessed **925,** e.g., based on sensor data from the first hinge sensor and/or on modeling of the CMM, and compared **926** with the target torque **96.** If the net torque **625** deviates from the target torque **96** substantially, the balancing torque **627** is adjusted **927.** The adjusted value of the balancing torque **627** is then compared **971** with an accessed **970** balancing threshold **97.** If the adjusted balancing torque **627** exceeds the balancing threshold **97** the functionality terminates. Said balancing threshold **97** allows the operator to override the balancing function in a gesture-controlled manner. In other words, firm movements, typically associated with repositioning the probe to a new measurement pose, automatically disable the balancing function. This measure not only provides convenient, intuitive operation, but also protects the motor from overload and reduces the power consumption of the counterweight element. If the balancing torque **627** is below the threshold **97** commands are provided **972** for the motor to provide the balancing torque **627** to the first hinge.

Figure 14 illustrates an active provision of an assistance torque **629** based on a guidance torque **628** acting on the first hinge due to an operator action relating to a manual guidance of one of the articulated elements by an operator, i.e., holding by hand and moving one of the segments, hinges or the probe interface. The assistance functionality is similar to the balancing functionality of Figure 13. However, the balancing functionality relates more to a provision a stable pose of the first hinge for improved accuracy and/or ergonomics of usage, whereas the assistance functionality relates more to aiding the movement of the first hinge during certain movements, respectively measurement gestures. In a first step the control unit accesses **810/929** the operator action data **928** and the measurement configuration data **81,** in particular regarding the settings of the force providing element, and/or the mechanism, and/or the friction element. Then a guidance torque **628** acting on the first hinge is derived **982** based on the operator action data **928** and the measurement configuration data **81.** The assistance torque **629** is derived **992** based on the guidance torque **628.** Finally, commands are provided **993** for the motor to provide the assistance torque **629** to the first hinge. Additional or alternative embodiments of the assistance functionality are within the sense of the invention. The assistance functionality might comprise advanced features e.g., providing a constant height of the probe interface and/or the second hinge. It is clear to the skilled person that sensible variations of the sequence of the steps illustrated in Figures 11-14 are possible within the sense of the invention. Although the invention is illustrated above, partly with reference to some specific embodiments, it must be understood that numerous modifications and combinations of different features of the embodiments can be made within the scope of the appended claims.

## Claims

1. Coordinate measuring machine (1) comprising a base (10), a set of articulated elements (11-16), a counterweight member (3), a set of internal sensors (70-76), a control unit (8) and a probe (5), wherein
- the set of articulated elements (11-16) comprises
o a first segment (12) connected to the base (10) by a first hinge (11),
o a second segment (14) connected to the first segment (12) by a second hinge (13), and
o a probe interface (16) connected to the second segment (14) by a third hinge (15) and configured to accommodate the probe (5),
- the probe (5) is configured to provide probe data (85) regarding an object point (20) in the environment,
- each sensor in the set of internal sensors (70-76) is associated with at least one of the articulated elements (11-16) and configured to provide internal sensor data (87) regarding the associated element,
- the control unit (8) is configured to derive
o a pose change (86) of the probe (5) based on the internal sensor data (87), and
o coordinate data (82) of the object point (20) based on the internal sensor data (87) and the probe data (85),
- the counterweight member (3) is associated with the first segment (12) and the first hinge (11) and configured to provide a counterweight torque (303) to the first hinge (11) having an opposite direction to a gravitational torque (123) acting on the first hinge (11),
**characterized in that**
the counterweight member (3) comprises a force-providing element and a mechanism, wherein the mechanism comprises
- a rotary element (42), wherein the force providing element is configured to provide a force to the rotary element (42),
- a static element (41) mounted on an axis (110) of the first hinge (11) and kinematically linked to the rotary element (42), wherein a shape of the static element (41) is configured to set the counterweight torque (303) as a function of a rotation state (91) of the first hinge (11),
- an internal support (127) configured to receive an input force (352) from the rotary element (42) and configured to provide an output force (353) to an interaction area (124) of the first segment (12), wherein
o the interaction area (124) is located closer to the second hinge (13) than the first hinge (11), and
o the output force (353) has lower magnitude than the input force (352).

2. The coordinate measuring machine (1) according to claim 1, wherein the first (12) and second segments (14) are elongated and configured to provide a rotation about a rotation axis (120,140) aligned with the direction of elongation, in particular wherein the first (12) and second segments (14) are substantially cylindrical.

3. The coordinate measuring machine (1) according to any one of claims 1 or 2, wherein the force-providing element comprises a spring (30), in particular wherein the spring (30)
- is a coil spring, in particular a pressure spring, and/or
- is located within the first segment (12) and aligned to the rotation axis (120) of the first segment (12), and/or
- is configured to provide a force substantially independent from the rotation state of the first segment (12).

4. The coordinate measuring machine (1) according to any one of the preceding claims, wherein the first segment (12) comprises a rigid first segment shell (128), and the first segment shell (128) interacts with the internal support (127) only through the interaction area (124), in particular wherein
an interaction sensor (129) is arranged to the interaction area (124) and configured to provide interaction sensor data regarding the output force (353).

5. The coordinate measuring machine (1) according to any one of the preceding claims, wherein the static element (41) is a cam,
in particular wherein the mechanism comprises
- a plurality of cams each having different shapes and a selection element configured to set one of the cams to act as the static element (41), and/or,
- a cam comprising a plurality of surfaces (418,419) and a first manual adjustment element (410) configured to set one of the plurality of surfaces (418,419) to act as the static element (41), and/or
- a second manual adjustment element (420) configured to adjust the pose of the rotary element (42), in particular wherein the second manual adjustment element (420) comprises a sliding element, a thread, or a screw; and/or
- a third manual adjustment element (430) configured to adjust a magnitude of the force exerted by the force providing element, in particular wherein the third manual adjustment (430) element comprises a sliding element, a thread, an excenter or a screw.

6. The coordinate measuring machine (1) according to any one of the preceding claims, wherein the shape of the static element (41) is designed
- to provide a stable position (621) and a stability range (624) for the first hinge (11), wherein within the stability range (624) a net torque (625), comprising the gravitational (123) and counterweight torques (303), causes a rotation of the first hinge (11) towards the stable position (621), and/or
- to provide a lift range (626) for the first hinge (11), wherein within the lift range (626) the net torque (625) causes an upward rotation of the first hinge (11),
in particular wherein the lift range (626) corresponds to one of
- a vertical position of the probe interface (16) being below a vertical position of the first hinge (11), and/or
- a vertical position of the second hinge (13) being below a vertical position of the first hinge (11).

7. The coordinate measuring machine (1) according to any one of the preceding claims, being configured to automatically adjust, based on the pose of the second segment (14), the force provided by the force providing element, and/or the pose of the rotary element (42).

8. The coordinate measuring machine (1) according to any one of the preceding claims, wherein the mechanism comprises a further rotary element (44) kinematically linked to the rotary element (42), wherein
- a rotation of the rotary element (42) causes a position change of a rotation axis (440) of the further rotary element (44) along a constrained path,
- the further rotary element (44) is in point or line contact with the static element (41),
- the axis (110) of the first hinge (11) has an offset (443) to a line (442) defined by a contact point (441) between the further rotary element (44) and the static element (41) and the rotation axis (440) of the further rotary element (44), and
- the shape of the static element (41) is configured to define the offset (443) as a function of the rotation state (91) of the first hinge (11),
in particular wherein the rotary element (42) is a lever gear and the further rotary element (44) is a roller mounted on the lever gear in a position offset to a rotation axis of the level gear.

9. The coordinate measuring machine (1) according to any one of the preceding claims, wherein the counterweight member (3) comprises a friction element (32) configured to provide a friction torque for the first hinge (11),
in particular wherein the friction element (32)
- is comprised by the mechanism, in particular arranged to the axis (110) of the first hinge (11), and
- causes a motionless parking state of the first hinge (11), in particular by blocking the rotation of the rotary element (42), in an absence of forces exerted by the operator on one of the articulated elements and/or as a result of a parking command provided by the operator.

10. The coordinate measuring machine (1) according to claim 9, wherein the friction element (32) is configured to provide a non-linear change of the friction torque dependent on
- the rotation state (91) and/or a motion speed (94) of the first hinge (11), and/or
- the rotation state and/or a motion speed of the probe interface (16) in particular wherein the friction element (32) comprises
- a flex rachet handle configured to block a downward a movement of the first hinge (11) in an engaged state, and
- a user interaction element (321) arranged to the proximity of the flex rachet handle and configured to activate and deactivate the engaged state.

11. The coordinate measuring machine (1) according to any one of claims 9 to 10, wherein
- an upper (92) and/or a lower safety level (93) is defined (920) regarding the rotation state (91) of the first hinge (11), and
- the friction element (32) is configured to provide an increment of the friction torque when the rotation state (91) of the first hinge (11) approaches one of the safety levels (92,93),
in particular wherein
- the set of internal sensors (70-76) provides crash protection data based on the rotation state (91) of the first hinge (11), and
- the control unit (8) is configured to provide (932) commands for the increment of the friction torque based on the crash protection data.

12. The coordinate measuring machine (1) according to any one of the preceding claims, wherein
- the rotary element (42) is a geared wheel, geared belt or geared lever,
- the force providing element comprises a motor (31), and
- the control unit (8) is configured to provide control commands to the motor (31),
in particular wherein
- the friction element (32) comprises the motor (31), and/or
- the motor (31) comprises a gearbox (311), and the rotary element (42) is in contact with the gearbox (311).

13. The coordinate measuring machine (1) according to claims 3 and 12, wherein
- a first hinge sensor (71) is configured to provide net torque data regarding the net torque (625) acting on the first hinge (11), and
- the control unit (8) is configured to provide a balancing functionality comprising
o accessing (925) and processing the net torque data (625),
o providing (972) commands to the motor (31) to provide a balancing torque (627) such that the net torque (625) acting on the first hinge (11) approaches a target torque (96), in particular zero,
in particular wherein the balancing torque (627) is limited
- to a magnitude of ± 30%, more particularly ± 20%, of the counterweight torque (303), and/or
- by a balancing threshold (97) such that the balancing functionality is deactivated if the balancing torque (627) exceeds the balancing threshold (97), in particular in response to an operator action.

14. The coordinate measuring machine (1) according to any one of claims 12 to 13, wherein coordinate measuring machine (1)
- comprises an operator action sensor configured to provide operator action data (928) regarding an operator guidance of one of the articulated elements (11-16),
- is configured to access (810) measurement configuration data (81), in particular regarding settings of the force providing element, and/or the mechanism, and/or the friction element (32),
- is configured to provide an assistance functionality comprising
o receiving and processing the operator action data (928),
o deriving (982) a guidance torque (628) acting on the first hinge (11) based on the operator action data (928) and the measurement configuration data (81), and
o providing (993) commands to the motor (31) to provide an assistance torque (629) acting on the first hinge (11), in particular wherein the assistance torque (629) has the same direction and at least the same magnitude as the guidance torque (628).

15. The coordinate measuring machine (1) according to any one of the preceding claims, wherein
- the counterweight member (3) is a first counterweight member, and
- the coordinate measuring machine (1) comprises a second counterweight member associated with the second hinge (13),
wherein the second counterweight member configured to provide a second counterweight torque to the second hinge (13) having an opposite direction to a second gravitational torque acting on the second hinge (13),
in particular wherein the second counterweight member comprises
- a second force-providing element, and
- a second mechanism comprising a second static element mounted on an axis (130) of the second hinge (13) and wherein a shape of the second static element is configured to set the second counterweight torque.

## Patentansprüche

1. Koordinatenmessmaschine (1), umfassend eine Basis (10), einen Satz von Gelenkelementen (11-16), ein Gegengewichtselement (3), einen Satz interner Sensoren (70-76), eine Steuereinheit (8) und eine Sonde (5), wobei
- der Satz von Gelenkelementen (11-16) umfasst
∘ ein erstes Segment (12), das über ein erstes Gelenk (11) mit der Basis (10) verbunden ist,
∘ ein zweites Segment (14), das über ein zweites Gelenk (13) mit dem ersten Segment (12) verbunden ist, und
∘ eine Sondenschnittstelle (16), die über ein drittes Gelenk (15) mit dem zweiten Segment (14) verbunden und zur Aufnahme der Sonde (5) eingerichtet ist,
- wobei die Sonde (5) eingerichtet ist, Sondendaten (85) bezüglich eines Objektpunkts (20) in der Umgebung bereitzustellen,
- jeder Sensor in dem Satz interner Sensoren (70-76) mindestens einem der Gelenkelemente (11-16) zugeordnet und eingerichtet ist, interne Sensordaten (87) bezüglich des zugeordneten Elements bereitzustellen,
- die Steuereinheit (8) eingerichtet ist, Folgendes abzuleiten
∘ eine Posenänderung (86) der Sonde (5) basierend auf den internen Sensordaten (87) und
∘ Koordinatendaten (82) des Objektpunkts (20) basierend auf den internen Sensordaten (87) und den Sondendaten (85),
- das Gegengewichtelement (3) dem ersten Segment (12) und dem ersten Gelenk (11) zugeordnet und eingerichtet ist, ein Gegengewichtsmoment (303) zu dem ersten Gelenk (11) bereitzustellen, das eine entgegengesetzte Richtung zu einem auf das erste Gelenk (11) wirkenden Gravitationsmoment (123) aufweist,
**dadurch gekennzeichnet, dass**
das Gegengewichtelement (3) ein Kraftbereitstellungselement und einen Mechanismus umfasst, wobei der Mechanismus umfasst
- ein Drehelement (42), wobei das Kraftbereitstellungselement eingerichtet ist, eine Kraft auf das Drehelement (42) bereitzustellen,
- ein statisches Element (41), das an einer Achse (110) des ersten Gelenks (11) angebracht und mit dem Drehelement (42) kinematisch verbunden ist, wobei eine Form des statischen Elements (41) eingerichtet ist, das Gegengewichtsmoment (303) als Funktion eines Drehzustands (91) des ersten Gelenks (11) einzustellen,
- eine interne Stütze (127), die eingerichtet ist, eine Eingangskraft (352) von dem Drehelement (42) aufzunehmen, und eingerichtet ist, eine Ausgangskraft (353) auf einen Interaktionsbereich (124) des ersten Segments (12) bereitzustellen, wobei
∘ sich der Interaktionsbereich (124) näher an dem zweiten Gelenk (13) als an dem ersten Gelenk (11) befindet, und
∘die Ausgangskraft (353) eine niedrigere Größe als die Eingangskraft (352) aufweist.

2. Koordinatenmessmaschine (1) nach Anspruch 1, wobei das erste Segment (12) und das zweite Segment (14) länglich sind und eingerichtet sind, eine Drehung um eine mit der Längenausdehnungsrichtung ausgerichtete Drehachse (120, 140) bereitzustellen, wobei insbesondere das erste Segment (12) und das zweite Segment (14) im Wesentlichen zylindrisch sind.

3. Koordinatenmessmaschine (1) nach einem der Ansprüche 1 oder 2, wobei das Kraftbereitstellungselement eine Feder (30) umfasst, wobei insbesondere die Feder (30)
- eine Spiralfeder und insbesondere eine Druckfeder ist und/oder
- sich innerhalb des ersten Segments (12) befindet und mit der Drehachse (120) des ersten Segments (12) ausgerichtet ist und/oder
- eingerichtet ist, eine Kraft bereitzustellen, die von dem Drehzustand des ersten Segments (12) im Wesentlichen unabhängig ist.

4. Koordinatenmessmaschine (1) nach einem der vorstehenden Ansprüche, wobei das erste Segment (12) eine starre erste Segmenthülle (128) umfasst und die erste Segmenthülle (128) nur über den Interaktionsbereich (124) mit der internen Stütze (127) interagiert, wobei insbesondere ein Interaktionssensor (129) an dem Interaktionsbereich (124) angeordnet und eingerichtet ist, Interaktionssensordaten bezüglich der Ausgangskraft (353) bereitzustellen.

5. Koordinatenmessmaschine (1) nach einem der vorstehenden Ansprüche, wobei das statische Element (41) eine Nocke ist, wobei insbesondere der Mechanismus umfasst
- mehrere Nocken mit jeweils unterschiedlichen Formen und ein Auswahlelement, das eingerichtet ist, eine der Nocken als statisches Element (41) einzustellen, und/oder
- eine Nocke, die mehrere Flächen (418, 419) und ein erstes manuelles Anpassungselement (410) umfasst, das eingerichtet ist, eine der mehreren Flächen (418, 419) derart einzustellen, dass sie als statisches Element (41) wirkt, und/oder
- ein zweites manuelles Anpassungselement (420), das eingerichtet ist, die Pose des Drehelements (42) anzupassen, wobei insbesondere das zweite manuelle Anpassungselement (420) ein Gleitelement, ein Gewinde oder eine Schraube umfasst; und/oder
- ein drittes manuelles Anpassungselement (430), das eingerichtet ist, eine Größe der von dem Kraftbereitstellungselement ausgeübten Kraft anzupassen, wobei insbesondere das dritte manuelle Anpassungselement (430) ein Gleitelement, ein Gewinde, einen Exzenter oder eine Schraube umfasst.

6. Koordinatenmessmaschine (1) nach einem der vorstehenden Ansprüche, wobei die Form des statischen Elements (41) ausgelegt ist
- eine stabile Position (621) und einen Stabilitätsbereich (624) für das erste Gelenk (11) bereitzustellen, wobei innerhalb des Stabilitätsbereichs (624) ein Nettomoment (625), welches das Schwerkraftmoment (123) und das Gegengewichtmoment (303) umfasst, eine Drehung des ersten Gelenks (11) in Richtung der stabilen Position (621) bewirkt, und/oder
- einen Hubbereich (626) für das erste Gelenk (11) bereitzustellen, wobei innerhalb des Hubbereichs (626) das Nettomoment (625) eine Aufwärtsdrehung des ersten Gelenks (11) bewirkt,
wobei insbesondere der Hubbereich (626) einem entspricht von
- einer vertikalen Position der Sondenschnittstelle (16), die sich unterhalb einer vertikalen Position des ersten Gelenks (11) befindet, und/oder
- einer vertikalen Position des zweiten Gelenks (13), die sich unterhalb einer vertikalen Position des ersten Gelenks (11) befindet.

7. Koordinatenmessmaschine (1) nach einem der vorstehenden Ansprüche, die eingerichtet ist, basierend auf der Pose des zweiten Segments (14) die von dem Kraftbereitstellungselement bereitgestellte Kraft und/oder die Pose des Drehelements (42) automatisch anzupassen.

8. Koordinatenmessmaschine (1) nach einem der vorstehenden Ansprüche, wobei der Mechanismus ein weiteres Drehelement (44) umfasst, das mit dem Drehelement (42) kinematisch verbunden ist, wobei
- eine Drehung des Drehelements (42) eine Positionsänderung einer Drehachse (440) des weiteren Drehelements (44) entlang einer eingeschränkten Bahn bewirkt,
- das weitere Drehelement (44) in Punkt- oder Linienkontakt mit dem statischen Element (41) steht,
- die Achse (110) des ersten Gelenks (11) einen Versatz (443) zu einer Linie (442) aufweist, die durch einen Kontaktpunkt (441) zwischen dem weiteren Drehelement (44) und dem statischen Element (41) und der Drehachse (440) des weiteren Drehelements (44) definiert ist, und
- die Form des statischen Elements (41) eingerichtet ist, den Versatz (443) als Funktion des Drehzustands (91) des ersten Gelenks (11) zu definieren,
wobei das Drehelement (42) insbesondere ein Hebelgetriebe und das weitere Drehelement (44) eine Rolle ist, die in einer zu einer Drehachse des Hebelgetriebes versetzten Position an dem Hebelgetriebe angebracht ist.

9. Koordinatenmessmaschine (1) nach einem der vorstehenden Ansprüche, wobei das Gegengewichtselement (3) ein Reibungselement (32) umfasst, das eingerichtet ist, ein Reibungsmoment für das erste Gelenk (11) bereitzustellen, wobei insbesondere das Reibungselement (32)
- von dem Mechanismus umfasst ist und insbesondere an der Achse (110) des ersten Gelenks (11) angeordnet ist und
- einen bewegungslosen Parkzustand des ersten Gelenks (11) insbesondere durch Blockieren der Drehung des Drehelements (42) bewirkt, wenn keine Kräfte von der Bedienungsperson auf eines der Gelenkelemente ausgeübt werden, und/oder als Ergebnis eines von der Bedienungsperson bereitgestellten Parkbefehls.

10. Koordinatenmessmaschine (1) nach Anspruch 9, wobei das Reibungselement (32) eingerichtet ist, eine nichtlineare Änderung des Reibungsmoments bereitzustellen in Abhängigkeit von
- dem Drehzustand (91) und/oder einer Bewegungsgeschwindigkeit (94) des ersten Gelenks (11) und/oder
- dem Drehzustand und/oder einer Bewegungsgeschwindigkeit der Sondenschnittstelle (16),
wobei insbesondere das Reibungselement (32) umfasst
- einen flexiblen Ratschengriff, der eingerichtet ist, eine Abwärtsbewegung des ersten Gelenks (11) in einem Eingriffszustand zu blockieren, und
- ein Benutzerinteraktionselement (321), das in der Nähe des flexiblen Ratschengriffs angeordnet und eingerichtet ist, es den Eingriffszustand zu aktivieren und zu deaktivieren.

11. Koordinatenmessmaschine (1) nach einem der Ansprüche 9 bis 10, wobei
- ein oberes (92) und/oder ein unteres Sicherheitsniveau (93) in Bezug auf den Drehzustand (91) des ersten Gelenks (11) definiert (920) ist und
- das Reibungselement (32) eingerichtet ist, es eine Erhöhung des Reibungsmoments bereitzustellen, wenn sich der Drehzustand (91) des ersten Gelenks (11) einem der Sicherheitsniveaus (92, 93) annähert, wobei insbesondere
- der Satz interner Sensoren (70-76) basierend auf dem Drehzustand (91) des ersten Gelenks (11) Aufprallschutzdaten bereitstellt und
- die Steuereinheit (8) eingerichtet ist, Befehle (932) zur Erhöhung des Reibungsmoments basierend auf den Aufprallschutzdaten bereitzustellen.

12. Koordinatenmessmaschine (1) nach einem der vorstehenden Ansprüche, wobei
- das Drehelement (42) ein Zahnrad, ein Zahnriemen oder ein Zahnhebel ist,
- das Kraftbereitstellungselement einen Motor (31) umfasst und
- die Steuereinheit (8) eingerichtet ist, Steuerbefehle an den Motor (31) bereitzustellen, wobei insbesondere
- das Reibungselement (32) den Motor (31) umfasst und/oder
- der Motor (31) ein Getriebe (311) umfasst und das Drehelement (42) mit dem Getriebe (311) in Kontakt steht.

13. Koordinatenmessmaschine (1) nach den Ansprüchen 3 und 12, wobei
- ein erster Gelenksensor (71) eingerichtet ist, Nettomomentdaten bezüglich des auf das erste Gelenk (11) wirkenden Nettomoments (625) bereitzustellen, und
- die Steuereinheit (8) eingerichtet ist, eine Ausgleichsfunktionalität bereitzustellen, die umfasst
o Zugreifen (925) auf und Verarbeiten der Nettomomentdaten (625),
o Bereitstellen (972) von Befehlen an den Motor (31), um ein Ausgleichsmoment (627) bereitzustellen, sodass sich das auf das erste Gelenk (11) wirkende Nettomoment (625) einem Sollmoment (96), insbesondere Null, annähert,
wobei insbesondere das Ausgleichsmoment (627) begrenzt ist
- auf eine Größe von ± 30 %, insbesondere ± 20 %, des Gegengewichtsmoments (303), und/oder
- durch einen Schwellenwert (97), sodass die Ausgleichsfunktionalität deaktiviert wird, wenn das Ausgleichsmoment (627) den Schwellenwert (97) insbesondere als Reaktion auf eine Bedienungspersonaktion überschreitet.

14. Koordinatenmessmaschine (1) nach einem der Ansprüche 12 bis 13, wobei die Koordinatenmessmaschine (1)
- einen Bedienungspersonaktionssensor umfasst, der eingerichtet ist, Bedienungspersonaktionsdaten (928) bezüglich einer Bedienungspersonführung von einem der Gelenkelemente (11-16) bereitzustellen,
- eingerichtet ist, auf Messkonfigurationsdaten (81) und insbesondere in Bezug auf Einstellungen des Kraftbereitstellungselements und/oder des Mechanismus und/oder des Reibungselements (32) zuzugreifen (810),
- eingerichtet ist, eine Unterstützungsfunktionalität bereitzustellen, die umfasst
o Empfangen und Verarbeiten der Bedienungspersonaktionsdaten (928),
o Ableiten (982) eines auf das erste Gelenk (11) wirkenden Führungsmoments (628) basierend auf den Bedienungspersonaktionsdaten (928) und den Messkonfigurationsdaten (81) und
o Bereitstellen (993) von Befehlen an den Motor (31), um ein auf das erste Gelenk (11) wirkendes Unterstützungsmoment (629) bereitzustellen, wobei insbesondere das Unterstützungsmoment (629) die gleiche Richtung und mindestens die gleiche Größe wie das Führungsmoment (628) aufweist.

15. Koordinatenmessmaschine (1) nach einem der vorstehenden Ansprüche, wobei
- das Gegengewichtselement (3) ein erstes Gegengewichtselement ist und
- die Koordinatenmessmaschine (1) ein zweites Gegengewichtselement umfasst, das dem zweiten Gelenk (13) zugeordnet ist,
wobei das zweite Gegengewichtselement eingerichtet ist, ein zweites Gegengewichtsmoment zu dem zweiten Gelenk (13) bereitzustellen, das eine entgegengesetzte Richtung zu einem auf das zweite Gelenk (13) wirkenden zweiten Gravitationsmoment aufweist,
wobei insbesondere das zweite Gegengewichtselement umfasst
- ein zweites Kraftbereitstellungselement und
- einen zweiten Mechanismus, der ein zweites statisches Element umfasst, das auf einer Achse (130) des zweiten Gelenks (13) angebracht ist, und wobei eine Form des zweiten statischen Elements eingerichtet ist, das zweite Gegengewichtsmoment einzustellen.

## Revendications

1. Machine de mesure par coordonnées (1) comprenant une base (10), un ensemble d'éléments articulés (11-16), un organe de contrepoids (3), un ensemble de capteurs internes (70-76), une unité de commande (8) et une sonde (5), dans laquelle
- l'ensemble d'éléments articulés (11-16) comprend
o un premier segment (12) raccordé à la base (10) par une première charnière (11),
o un deuxième segment (14) raccordé au premier segment (12) par une deuxième charnière (13), et
o une interface de sonde (16) raccordée au deuxième segment (14) par une troisième charnière (15) et configurée pour accueillir la sonde (5),
- la sonde (5) est configurée pour fournir des données de sonde (85) concernant un point d'objet (20) dans l'environnement,
- chaque capteur de l'ensemble de capteurs internes (70-76) est associé à au moins un des éléments articulés (11-16) et configuré pour fournir des données de capteur interne (87) concernant l'élément associé,
- l'unité de commande (8) est configurée pour dériver
o un changement de pose (86) de la sonde (5) sur la base des données de capteur interne (87), et
o des données de coordonnées (82) du point d'objet (20) sur la base des données de capteur interne (87) et des données de sonde (85),
- l'organe de contrepoids (3) est associé au premier segment (12) et à la première charnière (11) et configuré pour fournir un moment de contrepoids (303) à la première charnière (11) ayant une direction opposée à un moment gravitationnel (123) agissant sur la première charnière (11),
**caractérisée en ce que**
l'organe de contrepoids (3) comprend un élément fournissant une force et un mécanisme, dans laquelle le mécanisme comprend
- un élément rotatif (42), dans laquelle l'élément fournissant une force est configuré pour fournir une force à l'élément rotatif (42),
- un élément statique (41) monté sur un axe (110) de la première charnière (11) et relié cinématiquement à l'élément rotatif (42), dans laquelle une forme de l'élément statique (41) est configurée pour régler le moment de contrepoids (303) en fonction d'un état de rotation (91) de la première charnière (11),
- un support interne (127) configuré pour recevoir une force d'entrée (352) provenant de l'élément rotatif (42) et configuré pour fournir une force de sortie (353) à une zone d'interaction (124) du premier segment (12), dans laquelle
o la zone d'interaction (124) est située plus près de la deuxième charnière (13) que de la première charnière (11), et
o la force de sortie (353) a une grandeur inférieure à celle de la force d'entrée (352).

2. Machine de mesure par coordonnées (1) selon la revendication 1, dans laquelle les premier (12) et deuxième (14) segments sont allongés et configurés pour fournir une rotation autour d'un axe de rotation (120, 140) aligné avec la direction d'allongement, en particulier dans laquelle les premier (12) et deuxième (14) segments sont sensiblement cylindriques.

3. Machine de mesure par coordonnées (1) selon l'une quelconque des revendications 1 ou 2, dans laquelle l'élément fournissant une force comprend un ressort (30), en particulier dans laquelle le ressort (30)
- est un ressort hélicoïdal, en particulier un ressort de pression, et/ou
- est situé au sein du premier segment (12) et aligné avec l'axe de rotation (120) du premier segment (12), et/ou
- est configuré pour fournir une force sensiblement indépendante de l'état de rotation du premier segment (12).

4. Machine de mesure par coordonnées (1) selon l'une quelconque des revendications précédentes, dans laquelle le premier segment (12) comprend une coque (128) de premier segment rigide, et la coque (128) de premier segment interagit avec le support interne (127) uniquement par l'intermédiaire de la zone d'interaction (124), en particulier dans laquelle un capteur d'interaction (129) est agencé vers la zone d'interaction (124) et
configuré pour fournir des données de capteur d'interaction concernant la force de sortie (353).

5. Machine de mesure par coordonnées (1) selon l'une quelconque des revendications précédentes, dans laquelle l'élément statique (41) est une came,
en particulier dans laquelle le mécanisme comprend
- une pluralité de cames ayant chacune des formes différentes et un élément de sélection configuré pour régler l'une des cames afin qu'elle agisse comme élément statique (41), et/ou
- une came comprenant une pluralité de surfaces (418, 419) et un premier élément d'ajustement manuel (410) configuré pour régler l'une de la pluralité de surfaces (418, 419) pour qu'elle agisse comme élément statique (41), et/ou
- un deuxième élément d'ajustement manuel (420) configuré pour ajuster la pose de l'élément rotatif (42), en particulier dans laquelle le deuxième élément d'ajustement manuel (420) comprend un élément coulissant, un filetage ou une vis ; et/ou
- un troisième élément d'ajustement manuel (430) configuré pour ajuster une grandeur de la force exercée par l'élément fournissant une force, en particulier dans laquelle le troisième élément d'ajustement manuel (430) comprend un élément coulissant, un filetage, un excentrique ou une vis.

6. Machine de mesure par coordonnées (1) selon l'une quelconque des revendications précédentes, dans laquelle la forme de l'élément statique (41) est conçue
- pour fournir une position stable (621) et une plage de stabilité (624) pour la première charnière (11), dans laquelle au sein de la plage de stabilité (624) un moment net (625), comprenant les moments gravitationnel (123) et de contrepoids (303), provoque une rotation de la première charnière (11) vers la position stable (621), et/ou
- pour fournir une plage de levage (626) pour la première charnière (11), dans laquelle au sein de la plage de levage (626) le moment net (625) provoque une rotation vers le haut de la première charnière (11), en particulier dans laquelle la plage de levage (626) correspond à l'une parmi
- une position verticale de l'interface de sonde (16) étant située en dessous d'une position verticale de la première charnière (11), et/ou
- une position verticale de la deuxième charnière (13) étant située en dessous d'une position verticale de la première charnière (11).

7. Machine de mesure par coordonnées (1) selon l'une quelconque des revendications précédentes, étant configurée pour ajuster automatiquement, sur la base de la pose du deuxième segment (14), la force fournie par l'élément fournissant une force, et/ou la pose de l'élément rotatif (42).

8. Machine de mesure par coordonnées (1) selon l'une quelconque des revendications précédentes, dans laquelle le mécanisme comprend un élément rotatif supplémentaire (44) relié cinématiquement à l'élément rotatif (42), dans laquelle
- une rotation de l'élément rotatif (42) provoque un changement de position d'un axe de rotation (440) de l'élément rotatif supplémentaire (44) le long d'une trajectoire contrainte,
- l'élément rotatif supplémentaire (44) est en contact ponctuel ou linéaire avec l'élément statique (41),
- l'axe (110) de la première charnière (11) présente un décalage (443) par rapport à une ligne (442) définie par un point de contact (441) entre l'élément rotatif supplémentaire (44) et l'élément statique (41) et l'axe de rotation (440) de l'élément rotatif supplémentaire (44), et
- la forme de l'élément statique (41) est configurée pour définir le décalage (443) en fonction de l'état de rotation (91) de la première charnière (11),
en particulier dans laquelle l'élément rotatif (42) est un levier et l'élément rotatif supplémentaire (44) est un rouleau monté sur le levier dans une position décalée par rapport à un axe de rotation du levier.

9. Machine de mesure par coordonnées (1) selon l'une quelconque des revendications précédentes, dans laquelle l'organe de contrepoids (3) comprend un élément de friction (32) configuré pour fournir un moment de friction à la première charnière (11), en particulier dans laquelle l'élément de friction (32)
- est compris dans le mécanisme, en particulier agencé sur l'axe (110) de la première charnière (11), et
- provoque un état de stationnement immobile de la première charnière (11), en particulier en bloquant la rotation de l'élément rotatif (42), en l'absence de forces exercées par l'opérateur sur l'un des éléments articulés et/ou par suite d'un ordre de stationnement fourni par l'opérateur.

10. Machine de mesure par coordonnées (1) selon la revendication 9, dans laquelle l'élément de friction (32) est configuré pour fournir un changement non linéaire du moment de friction en fonction de
- l'état de rotation (91) et/ou d'une vitesse de déplacement (94) de la première charnière (11), et/ou
- l'état de rotation et/ou une vitesse de déplacement de l'interface de sonde (16)
en particulier, dans laquelle l'élément de friction (32) comprend
- une poignée à cliquet flexible configurée pour bloquer un mouvement vers le bas de la première charnière (11) dans un état engagé, et
- un élément d'interaction utilisateur (321) agencé à proximité de la poignée à cliquet flexible et configuré pour activer et désactiver l'état engagé.

11. Machine de mesure par coordonnées (1) selon l'une quelconque des revendications 9 et 10, dans laquelle
- un niveau de sécurité supérieur (92) et/ou inférieur (93) est défini (920) concernant l'état de rotation (91) de la première charnière (11), et
- l'élément de friction (32) est configuré pour fournir un incrément du moment de friction lorsque l'état de rotation (91) de la première charnière (11) s'approche de l'un des niveaux de sécurité (92, 93),
en particulier dans laquelle
- l'ensemble de capteurs internes (70-76) fournit des données de protection contre les collisions basées sur l'état de rotation (91) de la première charnière (11), et
- l'unité de commande (8) est configurée pour fournir (932) des ordres pour l'incrément du moment de friction sur la base des données de protection contre les collisions.

12. Machine de mesure par coordonnées (1) selon l'une quelconque des revendications précédentes, dans laquelle
- l'élément rotatif (42) est une roue dentée, une courroie dentée ou un levier denté,
- l'élément fournissant une force comprend un moteur (31), et
- l'unité de commande (8) est configurée pour fournir des ordres de commande au moteur (31),
en particulier dans laquelle
- l'élément de friction (32) comprend le moteur (31), et/ou
- le moteur (31) comprend une boîte de vitesses (311), et l'élément rotatif (42) est en contact avec la boîte de vitesses (311).

13. Machine de mesure par coordonnées (1) selon les revendications 3 et 12, dans laquelle
- un premier capteur de charnière (71) est configuré pour fournir des données de moment net concernant le moment net (625) agissant sur la première charnière (11), et
- l'unité de commande (8) est configurée pour fournir une fonctionnalité d'équilibrage comprenant
o l'accès (925) et le traitement des données de moment net (625),
o la fourniture (972) d'ordres au moteur (31) pour fournir un moment d'équilibrage (627) de telle sorte que le moment net (625) agissant sur la première charnière (11) se rapproche d'un moment cible (96), en particulier zéro,
en particulier dans laquelle le moment d'équilibrage (627) est limité
- à une grandeur de ± 30 %, plus particulièrement ± 20 %, du moment de contrepoids (303), et/ou
- par un seuil d'équilibrage (97) de telle sorte que la fonctionnalité d'équilibrage est désactivée si le moment d'équilibrage (627) dépasse le seuil d'équilibrage (97), en particulier en réponse à une action d'opérateur.

14. Machine de mesure par coordonnées (1) selon l'une quelconque des revendications 12 et 13, dans laquelle la machine de mesure par coordonnées (1)
- comprend un capteur d'action d'opérateur configuré pour fournir des données d'action d'opérateur (928) concernant un guidage par opérateur de l'un des éléments articulés (11-16),
- est configurée pour accéder (810) à des données de configuration de mesure (81), en particulier concernant des réglages de l'élément fournissant une force, et/ou du mécanisme, et/ou de l'élément de friction (32),
- est configurée pour fournir une fonctionnalité d'assistance comprenant
o la réception et le traitement des données d'action d'opérateur (928),
o le fait de dériver (982) un moment de guidage (628) agissant sur la première charnière (11) sur la base des données d'action d'opérateur (928) et des données de configuration de mesure (81), et
o la fourniture (993) d'ordres au moteur (31) pour fournir un moment d'assistance (629) agissant sur la première charnière (11), en particulier dans laquelle le moment d'assistance (629) a la même direction et au moins la même grandeur que le moment de guidage (628).

15. Machine de mesure par coordonnées (1) selon l'une quelconque des revendications précédentes, dans laquelle
- l'organe de contrepoids (3) est un premier organe de contrepoids, et
- la machine de mesure par coordonnées (1) comprend un deuxième organe de contrepoids associé à la deuxième charnière (13),
dans laquelle le deuxième organe de contrepoids est configuré pour fournir un deuxième moment de contrepoids à la deuxième charnière (13) ayant une direction opposée à un deuxième moment gravitationnel agissant sur la deuxième charnière (13),
en particulier dans laquelle le deuxième organe de contrepoids comprend
- un deuxième organe fournissant une force, et
- un deuxième mécanisme comprenant un deuxième organe statique monté sur un axe (130) de la deuxième charnière (13) et dans laquelle une forme du deuxième organe statique est configurée pour régler le deuxième moment de contrepoids.
